Europäisches Patentamt

European Patent Office

Office européen des brevets

Publication number: **0 285 195**
**A1**

# EUROPEAN PATENT APPLICATION

Application number: **88200400.5**

Int. Cl.4 **A01K 1/015**

Date of filing: **02.03.88**

| | |
|---|---|
| The title of the invention has been amended (Guidelines for Examination in the EPO, A-III, 7.3). | Applicant: **P.A.J. HOLST-RIJSWIJK B.V.**<br>**38, Backershagenlaan**<br>**NL-2243 AD Wassenaar(NL)** |
| Priority: **04.03.87 NL 8700523** | Inventor: **Holst, Pieter Adriaan Jacobus**<br>**38, Backershagenlaan**<br>**NL-2243 AD Wassenaar(NL)** |
| Date of publication of application:<br>**05.10.88 Bulletin 88/40** | Representative: **van der Kloet-Dorleijn,**<br>**Geertruida W.F., Drs. et al** |
| Designated Contracting States:<br>**AT BE CH DE ES FR GB GR IT LI LU NL SE** | **EXTERPATENT Willem Witsenplein 4**<br>**NL-2596 BK 's-Gravenhage(NL)** |

**Sheet-like disinfectant floor-covering material, especially for bird cages.**

The invention relates to a floor-covering material suitable for use in a cage for, in particular, birds comprising a moisture absorbent, pull and peck resistant, preferably reinforced, fibrous web, whereby said material has been impregnated with an aqueous solution containing a disinfectant comprising chlorohexidine and/or chloroxylenol and preferably also cetrimide and/or povidon iodine.

The invention also relates to a sheet-like material as well as a disinfecting solution to be used for the preparation of the floor-covering material of the invention.

EP 0 285 195 A1

## Floor-covering material suitable, in particular, for bird cages, and also a disinfecting and sheet-like material suitable for such an application.

The invention relates to a floor-covering material suitable for use in a cage for animals, more particularly, for birds.

Hitherto shell-sand has been used as floor-covering material in cages of cage animals, in particular, for cage birds. It is nevertheless difficult to remove shell-sand completely from the cage.Moreover, it is for many types of cage birds too sharp. By regular mechanical irritation then inflammation of the intestines develops.

By pecking in the food residues at the floor of the cage, which is contaminated by droppings of a diseased animal, an infection can spread quickly in a cage.

Further it has been found, that keeping birds, results in increased dust concentrations; this involves particles with dimensions of approx. 3 $\mu$m and over. The particles with diameters of approximately 3-10 $\mu$m can be breathed in and largely sediment in the human bronchi and bronchioli in particular.

Relative to other cage animals, domestic birds produce more dust particles which can be breathed in and specifically for the following reasons:

a. Birds are distinguished from all other animals by feathers. Feathers are very wear-resistant but not indestructible. The super fine bifurcations of the feathers consist of hard keratin fibers.

b. Parakeets and parrots produce a pulverulent dust which consists of bundled keratin microfibrils and have a minimum diameter of 1 $\mu$m. They grease their plumage by spreading the oily substance from the preen gland over their backs and sides with their beaks. Specialized body feathers, which grow continuously and pulverize to form fine dust particles, provide the keratin which is distributed during the cleaning of the feathers and has a function in rendering the plumage water-repellent. A healty parrot looks like a dusted cigar. Pigeons also powder themselves with their powder puff.

c. Bird droppings can form extremely fine dust after drying or when the cages are being cleaned. In this connection, the droppings of parakeets and canaries are per se much drier than the droppings of pigeons. Fine dust can best be removed by cleaning wet.

It appeared that the dust produced by domestic birds can result by biological contamination in chronic, allergic troubles of the air passages and the development of lung cancer in human beings.

The sand used hitherto increases said risk, because it results in drying up of the bird droppings.

A floor-covering material of the type mentioned in the introduction has now been found with which this risk of contamination can be eliminated. The floor-covering material according to the invention is characterized in that the floor-covering material comprises a moisture-absorbent, preferably pull and peck resistant layer-type material containing a disinfecting liquid.

Such a material has the advantage that, when it is introduced, the cage is disinfected by the presence of the disinfectant, while said disinfectant also has the consequence that the bacteria present in the bird droppings produced are destroyed.

Preferably, the floor-covering material will be porous. This makes it possible to guarantee an adequate absorbent power which is required for absorbing the disinfecting liquid while the bird droppings produced can also be absorbed and disinfected. The floor-covering material according to the invention has the additional advantage that, whenever the bird cage has to be cleaned, this can be done by simply picking up and replacing the soiled, moisture-absorbent, layer-type material containing disinfecting liquid and lying on the floor.

It is remarked that the floor-covering material according to the invention comprises a disinfecting liquid. Said liquid is present in such an amount that disinfection of the produced dirt, which comes into contact with the floor-covering material, takes place immediately. If desired, the layer-type material can be supersaturated with the disinfecting liquid. The layer-type material may be an optionally woven material. A fibrous web of carbohydrate fibres, in particular, a viscose fibrous web, is particularly suitable for the present application. A fibrous web which has preferably been reinforced is very expedient in view of the pecking of birds. In this manner it is possible to prevent that additional dust particles which can be breathed in are formed by said pecking. To obtain a so-called peck-resistant fibrous web, the fibrous web is preferably reinforced with a binder. The latter is very expediently an elastomeric binder; favorable results are obtained with a styrene-butadiene rubber as a binder. It has emerged that in the case of a disinfectant which contains chlorohexidine and/or chloroxylenol,the desired disinfection of cage and droppings is possible. Furthermore, said constituents are not toxic when in contact with the skin so that no additional precautionary measures are required when handling the floor-covering material according to the invention. It has been found that if the disinfecting liquid also contains cetrimide or povidon iodine the disinfectant action of the disinfectant agent (or agents) present is intensified. A disinfectant comprising 100-200 g/l cetrimide, 5-15 g/l chlorohexidine and/or povidon iodine and/or 40-60 g/l chloroxylenol in general provides the desired disinfection; preferably, the disinfectant comprises 150 g/l cetrimide, 10 g/l chlorohexidine and 49 g/l chloroxylenol. The chlorohexidine used can if desired completely be replaced or not by povidon iodine.

The invention also relates to a disinfecting liquid which is suitable for use in a cage for animals, in particular for birds, which is characterized in that the disinfecting liquid contains chlorohexidine and/or chloroxylenol, preferably in the form of a solution.

Preferaby, the disinfecting liquid also contains cetrimide or povidon iodine; the presence thereof results in a marked intensification of the disinfectant action.

More particularly, the disinfecting liquid consists of a solution comprising 100-200 g/l cetrimide, 5-15 g/l chlorohexidine and/or 5-15 g/l povidon iodine and/or 40-60 g/l chloroxylenol, preferably 150 g/l cetrimide, 10 g/l chlorohexidine and/or 10 g/l povidon iodine and 49 g/l chloroxylenol.

The invention furthermore relates to a sheet-like material which is suitable for forming a floor-covering material of the type mentioned above which is characterized in that the material is a fibrous web of carbohydrate fibres, preferably a viscose fibrous web. Said fibrous web is expediently reinforced with a binder, preferably an elastomeric binder, such as styrene-butadiene rubber.

The sheet-like material used accoding to the invention is pull and peck resistant. This means that by pecking of the birds fine dust particles cannot be produced.

To prevent the sheet-like material from leaking, it is expedient to provide the material on one side with a layer which is impermeable to liquid. Preferably, said impermeable layer consists of a polyethylene coating.

The invention will be explained in more detail on the basis of the following examples.

Example 1:

Use is made of a viscose fibrous web which is reinforced with a styrene-butadiene rubber.The specific weight of said reinforced fibrous web is approximately 33 g/m², while the thickness is approximately 28 mm. The water absorption rate does not exceed 5 ml/sec, while the water absorption capacity is not less than 500 % and not more than 850 %.

The fibrous web reinforced in this manner was impregnated with an aqueous solution which contains 150 g/l cetrimide, 10 g/l chlorohexidine and 49 g/l chloroxylenol, in such an amount that the fibrous web was supersaturated.

The tensile strength of the dry reinforced fibrous web was 55 N in the machine direction and 16 N in the transverse direction; after impregnation with the solution containing disinfectant, these values were 24 N and 6N respectively.

The impregnated fibrous web appeared to have particularly good resistance to pecking by birds, despite the impregnation. After being used for several days in a bird cage, no visible damage could be detected. Furthermore, the disinfectant used is not poisonous through the skin so that the impregnated fibrous web can easily be replaced without any particular precautions.

Example 2:

Use is made of the same reinforced fibrous web as described in Example 1, but said fibrous web is impregnated with an aqueous solution comprising 150 g/l cetrimide,10 g/l povidon iodine and 4 g/l chloroxylenol.

A fibrous web thus impregnated can also be replaced without any particular precautions and neither contained damages formed by pecking .

Example 3:

The same reinforced fibrous web is used as described in Example 1 but said fibrous web is also provided on one side with a polyethylene coating in a quantity of approximately 25 g/m². After impregnation with the same solution as in Example 1, a floor-covering material was obtained which, in addition to the advantages already mentioned, also has the advantage that leakage of the impregnated fibrous web is prevented so that the floor of the cage always remains dry.

Claims

1. Floor-covering material suitable for use in a cage for animals, more particularly for birds, characterized in that the floor-covering material comprises a moisture-absorbent, preferably pull and peck resistant, layer-type material containing a disinfecting liquid.

2. Floor-covering material according to claim 1, characterized in that the floor-covering material is porous and preferably consists of an optionally woven material, particularly a, preferably reinforced, fibrous web.

3. Floor-covering material according to claim 2, characterized in that the fibrous web consists of fibres of a natural or synthetic macromolecular material, such as a fibrous web of carbohydrate fibres, particularly a viscose fibrous web.

4. Floor-covering material according to claims 2 or 3, characterized in that the fibrous web has been reinforced with a binder, such as an elastomeric binder, preferably a styrene-butadiene rubber.

5. Floor-covering material according to claims 1-4, characterized in that the disinfectant contains chlorohexidine and/or chloroxylenol, and preferably also cetrimide and/or povidon iodine.

6. Floor-covering material according to claims 1-5, characterized in that the fibrous web is impregnated with a preferably aqueous solution containing 100-200 g/l cetrimide, 5-15 g/l chlorohexidine and/or povidon iodine and/or 40-60 g/l chloroxylenol, particularly 150 g/l cetrimide, 10 g/l chlorohexidine and/or povidon iodine and 49 g/l chloroxylenol.

7. Floor-covering material according to claims 1-6, characterized in that the material is provided on one side with a layer impermeable to liquid, particularly a coating of polyethylene.

8. Disinfecting liquid, suitable for use in a cage for animals, more particularly for birds, characterized in that the disinfecting liquid contains chlorohexidine and/or chloroxylenol, preferably in the form of a solution, and preferably also cetrimide and/or povidon iodine.

9. Disinfecting liquid according to claim 8, characterized in that the disinfecting liquid consists of a solution comprising 100-200 g/l cetrimide, 5-15 g/l chlorohexidine and/or povidon iodine and/or 40-60 g/l chloroxylenol, preferably 150 g/l cetrimide, 10 g/l chlorohexidine and/or povidon iodine and 49 g/l chloroxylenol.

10. Sheet-like material suitable for forming a floor-covering material according to claims 1-7, characterized in that the material is a fibrous web of carbohydrate fibres, preferably a viscose fibrous web, which is preferably reinforced with a binder, such as an elastomeric binder, more particularly a styrene-butadiene rubber, whereby the material preferably is provided on one side with a layer which is impermeable to liquid, such as a coating of polyethylene.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | EP-A-0 109 275  (PROCTER & GAMBLE)<br>* Page 4, lines 14-35; examples; claims * | 1-6,10 | A 01 K   1/015 |
| Y | US-A-4 517 919  (L. BENJAMIN et al.)<br>* Column 3, line 23; examples; claims * | 1-6,10 | |
| Y | US-A-4 638 763  (B. GREENBERG)<br>* Whole document * | 1 | |

TECHNICAL FIELDS
SEARCHED (Int. Cl.4)

A 01 K

The present search report has been drawn up for all claims

| Place of search | Date of completion of the search | Examiner |
|---|---|---|
| THE HAGUE | 29-04-1988 | GOLLER P. |

EPO FORM 1503 03.82 (P0401)